# EUROPEAN PATENT APPLICATION

(11) **EP 1 447 780 A1**
(43) Date of publication of application: **18.08.2004**
(21) Application number: 03250771.7
(22) Date of filing: 06.02.2003
(51) Int. Cl.: G08B 13/196, H04N 7/18

(54) **Method and apparatus for capturing and recording images of surrounding environment of a vehicle**

(71) Applicant: Ho, Jeffrey, Chu-Pei City, Hsin-Chu Hsien (TW)
(72) Inventor: Ho, Jeffrey, Chu-Pei City, Hsin-Chu Hsien (TW)
(74) Representative: McDonough, Jonathan

(57) **Abstract**

An apparatus (1) is used to capture and record images of the surrounding environment of a vehicle (2), and includes a proximity sensing device, a camera unit (12) and a recording medium (13) . The proximity sensing device is adapted to be mounted on the vehicle (2), and is adapted to detect the presence of an object that is in close proximity to the vehicle (2). The camera unit (12) is coupled to and is activated by the proximity sensing device for capturing images of the object upon detection by the proximity sensing device of the presence of the object that is in close proximity to the vehicle (2). The recording medium (13) is coupled to the proximity sensing device for recording the images captured by the camera unit (12).

## Description

The invention relates to an image capturing and recording apparatus, more particularly to a method and apparatus for capturing and recording images of the surrounding environment of a vehicle.

In the event of a car accident, the determination of who is at fault is always hampered by the fact that no first-hand physical evidence can be collected at the time of the accident. The written accident reports collected afterwards by police officers are rather speculative and subjective.

In addition, drivers often share the same annoying experience in gathering information of the surrounding environment of a vehicle when parking or backing the vehicle. The price of misinformation or misjudgment is undesired collision with some object. Therefore, car accessories, such as car-backing radars, are available for improving vehicle driving safety. The car-backing radar is usually mounted at the rear end of a vehicle, and includes a distance detector that is coupled to a sound generator. When the detector senses some object located within a predetermined distance from the rear end of the vehicle, the sound generator is activated to generate an alarm output for warning the driver. However, the area of coverage of the car-backing radar is limited to the rear side of the vehicle. Accordingly, the car-backing radar cannot be relied upon to gather information from all directions of the vehicle.

Therefore, the object of the present invention is to provide a method and apparatus for capturing and recording images of the surrounding environment of a vehicle in order to overcome the aforesaid drawbacks associated with the prior art.

According to one aspect of the present invention, there is provided a method for capturing and recording images of the surrounding environment of a vehicle. The method comprises the steps of:
a) detecting the presence of an object that is in close proximity to the vehicle through a proximity sensing device;
b) enabling the proximity sensing device to activate a camera unit for capturing images of the object upon detectionby the proximity sensing device of the presence of the object that is in close proximity to the vehicle; and
c) enabling the proximity sensing device to record the images captured by the camera unit in a recording medium.

According to another aspect of the present invention, there is provided an apparatus for capturing and recording images of the surrounding environment of a vehicle. The apparatus comprises:
a proximity sensing device adapted to be mounted on the vehicle and adapted to detect the presence of an object that is in close proximity to the vehicle;
a camera unit coupled to and activated by the proximity sensing device for capturing images of the object upon detection by the proximity sensing device of the presence of the object that is in close proximity to the vehicle; and
a recording medium coupled to the proximity sensing device, the proximity sensing device recording the images captured by the camera unit in the recording medium.

Other features and advantages of the present invention will become apparent in the following detailed description of the preferred embodiment with reference to the accompanying drawings, of which:
Figure 1 is a schematic circuit block diagram of the preferred embodiment of an apparatus for capturing and recording images of the surrounding environment of a vehicle according to the present invention;
Figure 2 is a schematic top view illustrating a vehicle equipped with proximity sensing devices and camera units of the apparatus of the preferred embodiment;
Figure 3 is a schematic view illustrating another vehicle equipped with a proximity sensing device and a camera unit of the apparatus of the preferred embodiment; and
Figure 4 is a flowchart illustrating the preferred embodiment of a method for capturing and recording images of the surrounding environment of a vehicle according to the present invention.

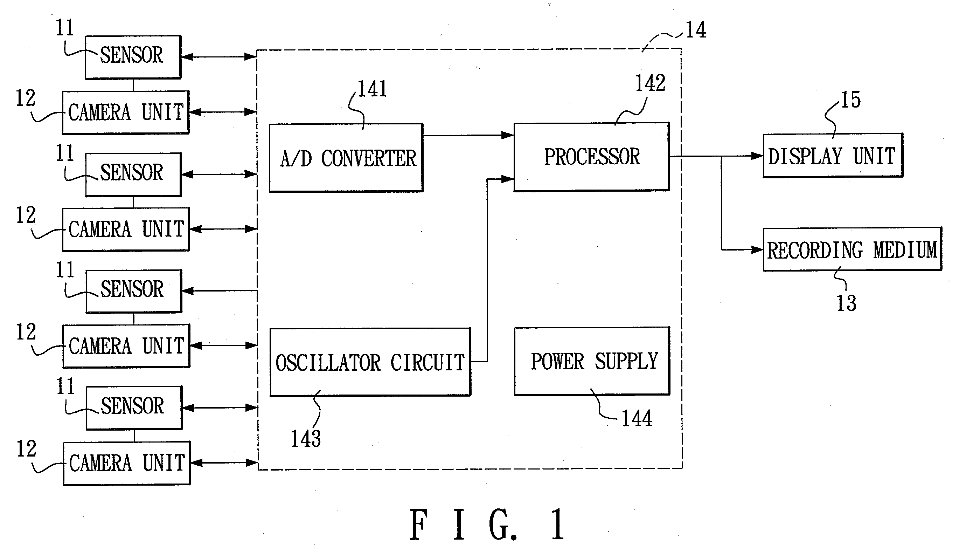

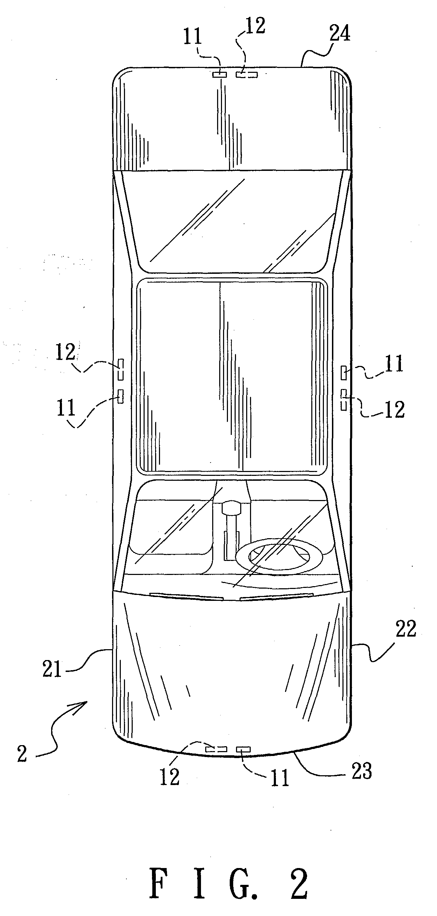

Referring to Figures 1 and 2, the preferred embodiment of an apparatus 1 for capturing and recording images of the surrounding environment of a vehicle 2 according to the present invention is shown to include a set of sensors 11 for detecting the presence of an object that is in close proximity to the vehicle 2, a set of camera units 12 for capturing images of the object that is in close proximity to the vehicle 2, a recording medium 13 for recording the images captured by the camera units 12, a controller 14 for controlling operations of the camera units 12 and the recording medium 13, and a display unit 15 for displaying the images captured by the camera units 12. The sensors 11 and the controller 14 constitute a proximity sensing device. In this embodiment, the sensors 11 and the camera units 12 are mounted on left and right lateral sides 21, 22 and front and rear ends 23, 24 of the vehicle 2, respectively.

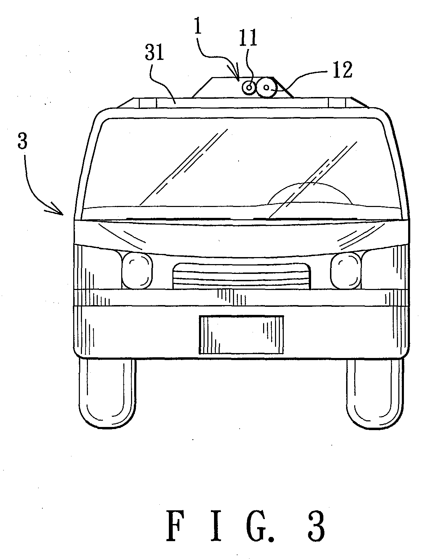

As shown in Figure 3, in practice, the apparatus 1 of this invention can include only one sensor 11 and one camera unit 12 that are rotatable about an axis. When the sensor 11 and the camera unit 12 are mounted on the roof 31 of a vehicle 3, such as a taxicab, images of the surrounding environment of the vehicle 3 can be captured and recorded in accordance with the present invention.

Referring once again to Figures 1 and 2, the controller 14 includes an analog-to-digital converter 141 coupled to each sensor 11 and each camera unit 12, a processor 142 coupled to and capable of processing signals received from the converter 141, an oscillator circuit 143 coupled to and providing timing signals to the processor 142, and a power supply 144 for providing power to all relevant components of the apparatus 1.

The processor 142 is further coupled to each camera unit 12, the recording medium 13 and the display unit 15. The recording medium 13 is preferably a portable hard disk. The display unit 15 is preferably mounted near the driver's seat for displaying images of the surrounding environment of the vehicle 2.

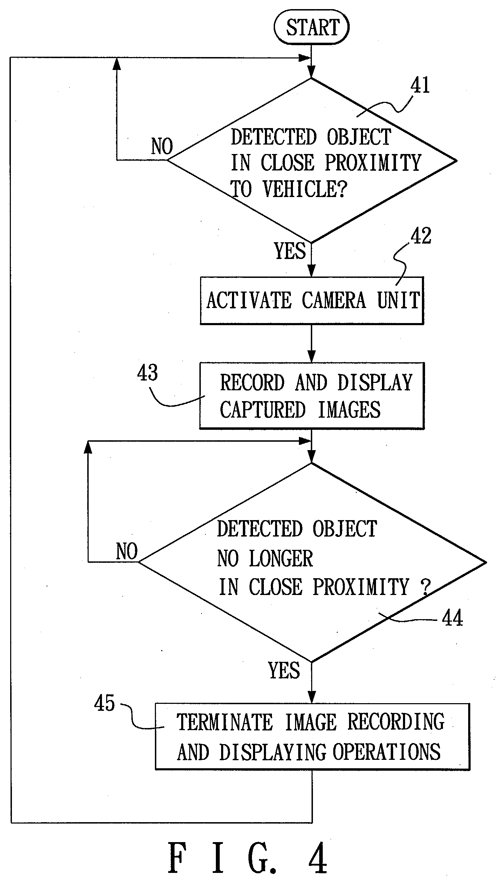

With further reference to Figure 4, the apparatus 1 is used to implement the preferred embodiment of a method for capturing and recording images of the surrounding environment of a vehicle 2 according to this invention. The method of the preferred embodiment comprises the following steps: In step 41, when the apparatus 1 is activated, the sensors 11 generate signals corresponding to relative distance between a detected object and the vehicle 2. The signals from the sensors 11 are converted by the converter 141 and are transmitted to the processor 142. The processor 142 determines the relative distances according to the signals from the sensors 11, and determines one detected object to be in close proximity to the vehicle 2 when the corresponding relative distance is shorter than a predetermined threshold. When there is a detected obj ect that is in close proximity to the vehicle 2, the flow proceeds to step 42, where the processor 142 sends a control signal to activate an appropriate one of the camera units 12 to begin capturing images of the detected object. Thereafter, in step 43, the analog output of the activated camera unit 12 is converted into a digital format by the converter 141 for subsequent reception by the processor 142. The processor 142 then records the captured images in the recording medium 13, and activates the display unit 15 to display the captured images simultaneously.

Subsequently, in step 44, the processor 142 determines whether the detected object is no longer in close proximity to the vehicle 2. In the negative, the image recording and displaying operations are continued. In the affirmative, the flow goes to step 45, where the processor 142 deactivates the recording medium 13 and the display unit 15 to terminate the image recording and displaying operations, and the flow then goes back to step 41.

Accordingly, in the event of a car accident, the apparatus 1 can be used to capture and record relevant images of the surrounding environment of the vehicle 2 at the time of the accident, which results in powerful physical evidence to permit reliable determination of accident responsibility for the protection of victim's rights. As for robbery and other criminal acts, the recorded information can also provide pictures of the criminals and first-hand evidence, which serve as a valuable key in solving criminal cases. Moreover, when parking or backing vehicles, drivers can monitor images of the surrounding environment of their vehicles through the provision of the display unit 15 in the apparatus 1 of this invention so as to ensure driving safety.

## Claims

1. A method for capturing and recording images of surrounding environment of a vehicle (2), **characterized by**:
a) detecting presence of an object that is in close proximity to the vehicle (2) through a proximity sensing device;
b) enabling the proximity sensing device to activate a camera unit (12) for capturing images of the object upon detection by the proximity sensing device of the presence of the object that is in close proximity to the vehicle (2); and
c) enabling the proximity sensing device to record the images captured by the camera unit (12) in a recording medium (13).

2. The method as claimed in Claim 1, further **characterized by**:
d) enabling the proximity sensing device to activate a display unit (15) for displaying the images captured by the camera unit (12).

3. The method as claimed in Claim 2, **characterized in that** steps c) and d) are performed simultaneously.

4. The method as claimed in Claim 1, **characterized in that** the proximity sensing device includes a sensor (11) that generates a signal corresponding to relative distance between the object and the vehicle (2), and a controller (14) coupled to the sensor (11) for determining the relative distance according to the signal received from the sensor (11) and for determining the object to be in close proximity to the vehicle (2) when the relative distance is shorter than a predetermined threshold.

5. An apparatus (1) for capturing and recording images of surrounding environment of a vehicle (2), **characterized by**:
a proximity sensing device adapted to be mounted on the vehicle (2) and adapted to detect presence of an object that is in close proximity to the vehicle (2) ;
a camera unit (12) coupled to and activated by said proximity sensing device for capturing images of the object upon detection by said proximity sensing device of the presence of the object that is in close proximity to the vehicle (2); and
a recording medium (13) coupled to said proximity sensing device, said proximity sensing device recording the images captured by said camera unit (12) in said recording medium (13).

6. The apparatus (1) as claimed in Claim 5, further **characterized by** a display unit (15) coupled to and activated by said proximity sensing device for displaying the images captured by said camera unit (12) .

7. The apparatus (1) as claimed in Claim 6, **characterized in that** said proximity sensing device records the images in said recording medium (13) and activates said display unit (15) simultaneously.

8. The apparatus (1) as claimed in Claim 5, **characterized in that** said proximity sensing device includes a sensor (11) that is adapted to generate a signal corresponding to relative distance between the object and the vehicle (2), and a controller (14) coupled to said sensor (11) for determining the relative distance according to the signal received from said sensor (11) and for determining the object to be in close proximity to the vehicle (2) when the relative distance is shorter than a predetermined threshold.

9. The apparatus (1) as claimed in Claim 8, further **characterized in that** said controller (14) includes an analog-to-digital converter (141) coupled to said sensor (11) and said camera unit (12), and a processor (142) coupled to said converter (141), said camera unit (12) and said recording medium (13).

10. The apparatus (1) as claimed in Claim 9, further **characterized in that** said controller (14) includes an oscillator circuit (143) coupled to said processor (142).

11. The apparatus (1) as claimed in Claim 5, **characterized in that** said recording medium (13) includes a hard disk.
